# EUROPÄISCHE PATENTSCHRIFT

(11) **EP 3 931 653 B1**
(45) Veröffentlichungstag und Bekanntmachung des Hinweises auf die Patenterteilung: **29.10.2025**
(21) Anmeldenummer: 20718155.3
(22) Anmeldetag: 23.03.2020
(51) Int. Cl.: G05B 19/418, G05B 17/02

(54) **VERFAHREN ZUM ENGINEERING UND SIMULATION EINES AUTOMATISIERUNGSSYSTEMS MITTELS DIGITALER ZWILLINGE**
METHOD FOR ENGINEERING AND SIMULATING AN AUTOMATION SYSTEM BY MEANS OF DIGITAL TWINS
PROCÉDÉ D'INGÉNIERIE ET DE SIMULATION D'UN SYSTÈME D'AUTOMATISATION AU MOYEN DE JUMEAUX NUMÉRIQUES

(30) Priorität: 29.03.2019 DE 102019204480
(43) Veröffentlichungstag der Anmeldung: 05.01.2022
(73) Patentinhaber: Siemens Aktiengesellschaft, 80333 München (DE)
(72) Erfinder: LUTZ, Benjamin, 76327 Pfinztal (DE)
(74) Vertreter: Siemens Patent Attorneys
(86) Internationale Anmeldenummer: PCT/EP2020/057945
(87) Internationale Veröffentlichungsnummer: WO 2020/200870

(56) Entgegenhaltungen:
- EP-A1- 3 082 001
- EP-A1- 3 082 001
- DE-A1- 10 245 176
- DE-A1- 10 245 176
- JANIS EITNER ET AL: "Industrie 4.0: Virtueller Zwilling steuert die Produktion", HANNOVER MESSE PREVIEW 2017: PRESSEINFORMATION, 9 February 2017 (2017-02-09), M�nchen, pages 1 - 5, XP055565692, Retrieved from the Internet <URL:https://www.fraunhofer.de/content/dam/zv/de/presse-medien/2017/Februar/pi5_IPK_Virtueller%20Zwilling%20steuert%20die%20Produktion_2016.pdf> [retrieved on 20190307]
- JANIS EITNER ET AL: "Industrie 4.0: Virtueller Zwilling steuert die Produktion", HANNOVER MESSE PREVIEW 2017: PRESSEINFORMATION, 9 February 2017 (2017-02-09), München, pages 1 - 5, XP055565692, Retrieved from the Internet <URL:https://www.fraunhofer.de/content/dam/zv/de/presse-medien/2017/Februar/pi5_IPK_Virtueller%20Zwilling%20steuert%20die%20Produktion_2016.pdf> [retrieved on 20190307]

## Beschreibung

Die Erfindung betrifft ein Verfahren zum Engineering eines Automatisierungssystems zur Steuerung eines Prozesses in einer verfahrenstechnischen Anlage, wobei das Automatisierungssystem eine Vielzahl von Hardware-Komponenten zur Ausführung von Anzeige-, Bedien- und Automatisierungsfunktionen umfasst und über Kommunikationssysteme miteinander verbunden sind. Die Erfindung betrifft ferner ein zur Durchführung des Verfahrens ausgebildetes Automatisierungssystem.

So genannte "digitale Zwillinge" sind aus der Produktionstechnik hinlänglich bekannt. Es handelt sich dabei um computergestützte Abbilder oder Repräsentanten eines Objekts aus der realen Welt. Gemäß dem Gabler Wirtschaftslexikon (https://wirtschaftslexikon.gabler.de/definition/digitalerzwilling-54371) wird ein digitaler Zwilling als ein virtuelles Modell z.B. eines Prozesses, eines Produkts oder einer Dienstleistung definiert, welches die reale und virtuelle Welt verbindet. Digitale Zwillinge sind aus Daten und Algorithmen aufgebaut und verwenden reale Daten von installierten Sensoren, welche z.B. die Arbeitsbedingungen oder Position von Maschinen repräsentieren. Digitale Zwillinge bilden Anlagen über den gesamten Lebenszyklus (Design, Erstellung, Betrieb und Wiederverwertung) ab. Schon während der Planung können Ingenieure Simulationsmodelle nutzen, um Abläufe zu optimieren. Ist die Anlage in Betrieb, können die gleichen Simulationsmodelle verwendet werden, um Abläufe weiter zu optimieren und um die Produktion zu wandeln.

Die Erstellung eines digitalen Zwillings erfordert verschiedene Elemente. In der Regel sind das ein reales abzubildendes Objekt, ein virtueller Darstellungsraum und Daten zu den Umgebungsbedingungen. Die Zwillinge werden durch gesammelte Echtzeitdaten des realen Objekts und beschreibende Algorithmen erstellt und in einem digitalen Darstellungsraum abgebildet. Oft findet ein modulares Konzept Verwendung, bei dem sich der Digitale Zwilling aus vielen einzelnen Digitalen Zwillingen zusammensetzt. (https://www.bigdata-insider.de/was-ist-ein-digitaler-zwilling-a-728547/)

Auch im Rahmen der Automatisierung verfahrenstechnischer Prozesse ergeben sich vielfache Anwendungen für computergestützte Abbilder realer Objekte.

Bei der Inbetriebnahme einer verfahrenstechnischen Anlage wird üblicherweise derart vorgegangen, dass das Engineering der Anlage mit einer Simulation oder Emulation ergänzt wird. Bevor Automatisierungsprogramme und Anlagenbilder in eine reale und laufende Anlage geladen werden, müssen sie entsprechend getestet und ggf. auch korrigiert werden. Hierfür wird in der Regel auf einen digitalen Zwilling zurückgegriffen - d.h. die Automatisierungsprogramme werden beispielsweise in emulierte Automatisierungsserver einer virtuellen Schattenanlage geladen und getestet. Um die Feldebene zu virtualisieren wird ein Anlagensimulator genutzt, der Modelle der Feldebene abarbeitet und die Prozess-Eingaben und Prozess-Ausgaben mit den virtuellen Automatisierungen austauscht. Die Simulation/Emulation geschieht dabei vollkommen entkoppelt vom Engineering des Automatisierungssystems, was häufig sehr nachteilig ist: Für Änderungen und Anpassungen in den Automatisierungsprogrammen und Anlagenbildern muss zwischen Simulation und Engineering hin und her gewechselt werden. Dadurch kann es leicht zu Inkonsistenzen oder Parametrierfehlern in der Simulation kommen. Diese können auch die reale Anlage gefährden, wenn sich z.B. die IP-Adressen der durch die Simulation verwendeten, virtuellen Automatisierungen mit denen der Automatisierungen der realen Anlage überschneiden, wenn sich beide im selben Netz befinden.

Aus der EP 2 082 001 A1 ist ein Verfahren zum Erweitern einer Automatisierungseinrichtung mittels einem virtuellen Feldgerät sowie eine entsprechende Automatisierungseinrichtung bekannt, wobei zunächst ein virtuelles Feldgerat und ein Steuer-Baustein an die Automatisierungseinrichtung virtuell angeschlossen und die Kommunikation- und Steuer-Belastung durch dieses virtuelle Feldgerat und den Steuer-Baustein ermittelt wird. Falls die ermittelte Kommunikation- und Steuer-Belastung eine vorgegebene Lastgrenze nicht überschreitet, wird der Steuer-Baustein durch den Benutzer freigegeben und in das Steuerprogramm eingebunden und das entsprechende realle Feldgerat kann an den Profibus angeschlossen werden. Es handelt sich hierbei um einen Stresstest für die Erweiterung des Automatisierungssystems mit einem Feldgerät.

In der DE 102 45 176 A1 wird bei einem Verfahren zur Simulation eines Feldgeräts in einem Netzwerk der Prozessautomatisierung das Feldgerat als virtuelles Feldgerat in einem Softwarecode beschrieben, der auf einer Komponente des Netzwerks abläuft und der das Verhalten und die Funktionalität des Feldgeräts so beschreibt, dass es von einem herkömmlichen Bedienwerkzeug aus wie ein reales an das Netzwerk angeschlossenes Feldgerät bedient werden kann. Dadurch kann das Verhalten an die Funktionalität eines Feldgerätes im Voraus getestetwerden. Der digitale Zwilling beschränkt sich hier allein auf das Feldgerät.

In der Veröffentlichung Janis Eitner et al.: "Industrie 4.0: Virtueller Zwilling steuert die Produktion", Hannover Messe Preview 2017: Presseinformation, Seiten 1-5, Internet:URL:https://www.fraunhofer.de/content/dam/zv/de/pressemedien/2017/Februar/pi5_1PK_Virtueller%20Zwilling%20steuert %20die%20Produktion_2016.pdf, XP055565692,9. Februar2017 wird beschrieben, wie in der Industrie 4.0 die reale und virtuelle Produktion mittels digitaler Zwillinge zu einem intelligenten Gesamtsystem verschmelzen, welches sich im laufenden Betrieb selbst überwacht, steuert und korrigiert. Der Aspekt des Engineerings eines solchen Systems wird jedoch nicht betrachtet.

Der Erfindung liegt daher die Aufgabe zugrunde, ein flexibleres Verfahren zum Engineering eines Automatisierungssystems einer technischen Anlage anzugeben, das eine koexistente Simulation, Emulation oder Virtualisierung einer beliebigen Anzahl von Komponenten des Automatisierungssystems als integraler Bestandteil des Engineerings der Hardware-Konfiguration des Automatisierungssystems erlaubt. Des Weiteren soll ein zur Durchführung des Verfahrens besonders geeignetes Automatisierungssystem für eine technische Anlage angegeben werden.

Diese Aufgabe wird durch ein Verfahren mit den Merkmalen des Anspruchs 1 gelöst. Außerdem wird die Aufgabe durch ein Automatisierungssystem gemäß Anspruch 8 gelöst. Vorteilhafte Weiterbildungen ergeben sich aus den abhängigen Ansprüchen.

Im Zusammenhang mit Simulationen spricht man von dem zu simulierenden System und von einem Simulator als Implementierung oder Realisierung eines Simulationsmodells. Das Simulationsmodell stellt somit eine Abstraktion des zu simulierenden Systems in Struktur, Funktion und Verhalten dar. Ein Emulator hingegen versucht das ganze Zielsystem so originalgetreu wie möglich nachzubilden. Das nachgebildete System erhält die gleichen Daten, führt vergleichbare Programme aus und erzielt die möglichst gleichen Ergebnisse in Bezug auf bestimmte Fragestellungen wie das reale Zielsystem. Als Virtualisierung wird in der Informatik die Nachbildung eines Hard- oder Software-Objekts durch ein ähnliches Objekt vom selben Typ mit Hilfe einer Abstraktionsschicht bezeichnet. Dadurch lassen sich virtuelle Geräte wie emulierte Hard- oder Software erzeugen. Eine Möglichkeit, eine Virtualisierung eines Objektes zu erreichen, ist die Virtuelle Maschine (VMware).

Gegenstand der Erfindung ist es nun, solch virtuelle Geräte wie emulierte Hardwarekomponenten eines Automatisierungssystems (emulierte Automatisierungen, Operator Station Server, usw.) bei der Hardwarekonfiguration während des Engineerings einzusetzen, um vorteilhaft parallel zum Engineering der realen Hardwarekomponenten verschiedene Stufen und Varianten von digitalen Zwillingen für die flexible und stufenweise Inbetriebnahme von Automatisierungsprogrammen und Anlagenbildern zu erreichen.

Das erfindungsgemäße Verfahren zum Engineering eines Automatisierungssystems zur Steuerung eines Prozesses in einer technischen Anlage, wobei das Automatisierungssystem eine Vielzahl von Hardware-Komponenten zur Ausführung von Anzeige-, Bedienfunktionen und Automatisierungsfunktionen umfasst, und diese Komponenten über Kommunikationssysteme miteinander verbunden sind, ist dadurch gekennzeichnet, dass unabhängig vom Betrieb der Anlage, parallel zum Engineering mindestens einer realen Hardware-Komponente diese Komponente auch virtualisiert als koexistenter digitaler Zwilling erzeugt instanziiert und mit anderen virtuellen oder realen Komponenten logisch verknüpft wird. Die derart erzeugten virtuellen Komponenten können (beliebig) konfiguriert und optimiert werden, indem während des Engineerings zur Laufzeit innerhalb eines Zyklus des Automatisierungssystems in einem Operator Station Client zwischen realen Komponenten und virtuellen Komponenten umgeschaltet werden kann, um Automatisierungsprogramme und Anlagenbilder zu testen und zu korrigieren. Anschließend werden die Automatisierungsprogramme und Anlagenbilder aus den virtuellen Komponenten (VOS1, VOS2, VAS1, VAS2, ...) den realen Komponenten zugewiesen und geladen, sodass die realen Komponenten mit der geänderten Konfiguration betrieben werden können.

Die Vorteile des Einsatzes virtueller Komponenten beim Engineering sind vielfältig. Insbesondere ist eine koexistente, sichere, flexible und stufenweise Inbetriebnahme von Automatisierungsprogrammen und Anlagenbildern möglich. Eine betriebsparallele Optimierung auf Grundlage des digitalen Zwillings wird unterstützt. Sowohl die reale Anlage als auch der digitale (Teil-)Zwilling ist durch das integrierte Engineering stets konfigurierbar und überwacht.

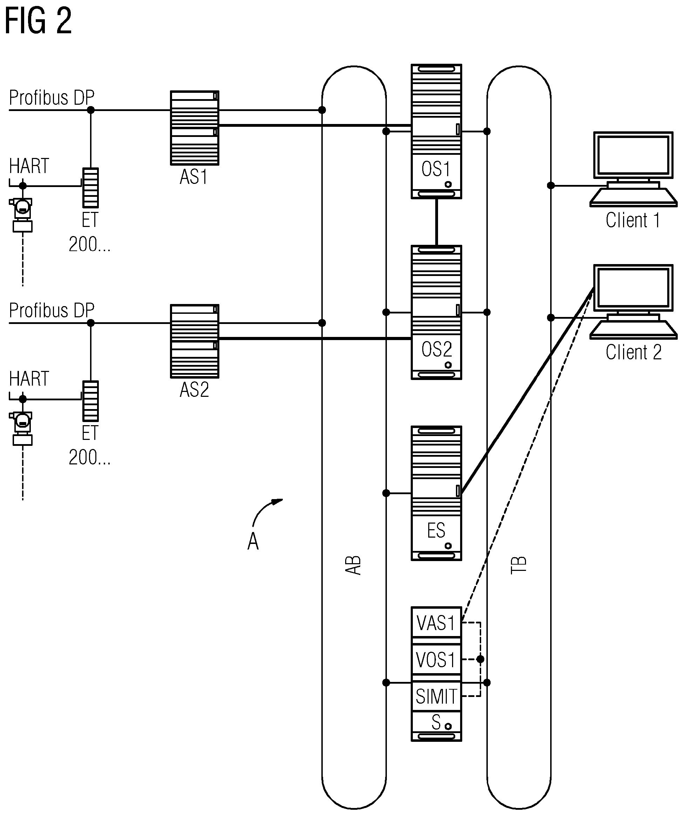

Ein großer Vorteil der Erfindung besteht darin, dass das Verfahren "unabhängig vom Betrieb der Anlage" durchführbar ist. Dies bedeutet, dass bereits vor der Inbetriebnahme die virtuellen Komponenten erzeugt werden können. Gleichzeitig ist auch während der Inbetriebnahme (vgl. Fig. 2) oder sogar während des laufenden Betriebs eine Virtualisierung möglich. Dies gewährt dem Projekteur der technischen Anlage eine große Flexibilität.

Der virtuelle Zwilling oder die virtuelle Komponente kann beispielsweise dadurch erzeugt werden, dass der Projekteur in einer Gerätebibliothek des Engineering-Servers auf das gewünschte Objekt klickt. Dadurch wird eine Instanz erzeugt, die den derzeitigen Zustand einer Hardware-Komponente repräsentiert. Der virtuellen Komponente wird dabei auch eine eigene IP-Adresse zugewiesen. Danach wird die logische Verbindung festgelegt. Diese definiert die Kommunikationsbeziehung zwischen den jeweiligen Komponenten (hier Geräten). Wird eine logische Verbindung zwischen einer Automatisierung und einem Operator Station Server definiert, können auch zur Laufzeit Prozessdaten übertragen werden. Bevor jedoch Automatisierungsprogramme und Anlagenbilder in eine reale und laufende Anlage geladen werden, können sie nun in der virtuellen Komponente beliebig konfiguriert, getestet und ggf. auch korrigiert werden. Anschließend werden die derart optimierten virtuellen Komponenten parallel zu den realen Komponenten auf Server des Automatisierungssystems geladen und ausgeführt. Das erfindungsgemäße Verfahren erlaubt vorteilhaft eine Koexistenz der beiden Ausprägungen eines Objektes als reale Komponente und virtuelle Komponente.

In einer besonders vorteilhaften Ausführungsvariante können die virtuellen Komponenten beliebig auf die Server des Automatisierungssystems verteilt werden. Diese Verteilung ist flexibel konfigurierbar. Im Hardwareengineering kann somit bestimmt oder festgelegt werden, auf welchen Servern des Automatisierungssystems welche virtuellen Geräte lokalisiert werden sollen. Auf diese Weise können die Speicherkapazitäten der Server des Automatisierungssystems optimal ausgenutzt und/oder flexibel eingesetzt werden.

Ein weiterer signifikanter Vorteil der Erfindung besteht darin, dass die Anzahl der virtuellen Komponenten frei wählbar ist. Damit ergibt sich eine skalierbare Lösung. Durch die Skalierbarkeit dieses Lösungsansatzes ist somit auch eine "Multi-User" Simulation möglich, da sich quasi jeder Projekteur einen eigenen für seinen Test maßgeschneiderten digitalen (Teil-)Zwilling konfigurieren und nutzen kann.

In einer weiteren vorteilhaften Ausführungsvariante sind die logischen Verbindungen zwischen den virtuellen Komponenten und zwischen den virtuellen und realen Komponenten flexibel konfigurierbar. Dadurch lassen sich beliebige Varianten des Engineerings realisieren. Durch eine Festlegung der logischen Verbindungen ist es darüber hinaus auch möglich, genau projektieren zu können, welche (virtuellen) Geräte mit welchen (virtuellen) Geräten kommunizieren dürfen.

Vorteilhaft können die virtuellen Komponenten in einer Datenbank verwaltet werden. Dies erlaubt beispielsweise einem Nutzer der Datenbank die Komponente eines anderen Nutzers weiter zu verändern oder zu modifizieren. Auf diese Weise wird das Engineering erleichtert und kann ggfs. auch schneller erfolgen.

In einer weiteren Ausführungsvariante werden für alle virtuellen Komponenten (wie auch bei den realen Komponenten) die Zuweisungen zu der technologischen Hierarchie unterstützt. Durch so genannte Zuweisungen in der technologischen Hierarchie wird definiert, welche Anlagenteile durch welche Geräte automatisiert werden - wird z.B. ein Strukturordner "Teilanlag1" einer AS1 und einer OS1 zugeordnet, sind die unterhalb des Strukturordners angelegten Automatisierungsprogramme (Funktionspläne) automatisch der AS1 und die jeweiligen Anlagenbilder der OS1 zugeordnet und werden folglich auch dort hin geladen und ausgeführt. Eine Teilanlage in einem Strukturordner kann zunächst für die stufenweise Inbetriebnahme nur virtuellen Komponenten zugewiesen werden. Erst wenn die Funktion der Automatisierungsprogramme und Anlagenbilder durch die Simulation abgesichert wurde, kann derselbe Strukturordner mit der Teilanlage realen Geräten zugewiesen werden. Darüber hinaus können die Strukturordner Teilanlagen (natürlich auch feingranulare Anlagenteile, wie z.B. technische Einrichtungen und sogar Messstellen) in der technologischen Hierarchie auch dupliziert und parallel virtuellen Komponenten zugeordnet werden, um einen parallel zur realen Anlage laufenden digitalen Zwilling (z.B. für Betriebsoptimierungen) realisieren zu können.

Den virtuellen Komponenten können vorteilhaft Automatisierungsdokumente wie Funktionspläne oder Anlagenbilder für eine Inbetriebnahme zugewiesen werden, bevor sie auf die Server des Automatisierungssystems geladen werden. Virtuelle Geräte können im Zuge einer stufenweisen Inbetriebnahme, betriebsparallel, zunächst nur mit virtuellen, später auch mit realen Geräten, interagieren. Dafür werden die logischen Verbindungen zwischen den Geräten umkonfiguriert. (Beispiel: Für die Inbetriebnahme eines neuen Anlagenbildes interagiert die virtuelle Operator Station zwecks Dynamisierung des Anlagenbildes zunächst mit einer virtuellen Automatisierung - um u.a. Fehlbedienungen zu vermeiden. In einem nächsten Schritt interagiert die virtuelle Operator Station dann mit einer realen Automatisierung, um das für die Inbetriebnahme vorgesehene Anlagenbild mit realen Prozessdaten zu dynamisieren. Im letzten Schritt wird das in Betrieb genommene Anlagenbild schließlich einer realen Operator Station zugewiesen).

Eine Inbetriebnahme verschiedener Automatisierungsdokumente kann vorteilhaft parallel durch mehrere Projekteure erfolgen und auf unterschiedlichen und/oder mehrfach vorhandenen virtuellen Komponenten erfolgen. Auch dies erlaubt eine große Skalierbarkeit.

Im Folgenden wird die Erfindung sowie deren Ausgestaltungen anhand der Figuren, in denen ein Ausführungsbeispiel der Erfindung dargestellt ist, näher beschrieben und erläutert.

Es zeigen:
- Figur 1: ein Funktionsschema eines Automatisierungssystems zur Steuerung eines Prozesses mit angedeuteter Softwarearchitektur zur Implementierung des erfindungsgemäßen Verfahrens in der Ausführungsform einer betriebsparallelen Optimierung
- Figur 2: ein weiters Funktionsschema eines Automatisierungssystems zur Steuerung eines Prozesses mit angedeuteter Softwarearchitektur zur Implementierung des erfindungsgemäßen Verfahrens in der Ausführungsform einer stufenweisen Inbetriebnahme

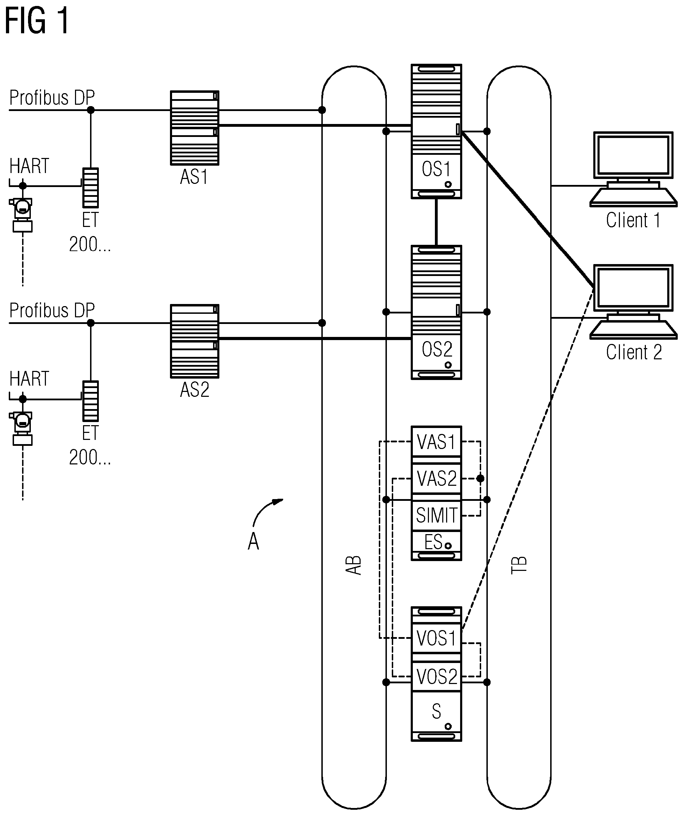

Figur 1 zeigt in vereinfachter schematischer Darstellung ein Beispiel für ein Automatisierungssystems A, mittels dessen ein zumeist verfahrenstechnischer Prozess in einer technischen Anlage, z.B. einer technischen Fertigungs-, Produktions- oder auch Energieerzeugungsanlage, gesteuert, geregelt und überwacht wird. Das Automatisierungssystem A weist eine Vielzahl von prozessnahen Komponenten (Feldgeräte, Baugruppen, I/O Systeme, Controller) auf, die auf Feldebene, also im Prozess, vorgegebene Mess-, Steuer- und Regelungsfunktionen wahrnehmen. Die Feldgeräte tauschen über ein Kommunikationssystem (hier Profibus TB) prozess-, funktions- und/oder geräterelevante Daten untereinander und mit den höher gelegenen Steuerungs- und Leitebenen aus. Das Kommunikationssystem der Feldebene ist mit einer Vielzahl von Automatisierungsgeräten AS wie z.B. speicherprogrammierbaren Steuerungen (SPS) verbunden. Die Automatisierungsgeräte AS1, AS2 wiederum sind über ein weiteres Kommunikationssystem, dem Anlagenbus AB, welcher zumeist als Industrial Ethernet ausgeführt ist, mit einem übergeordneten Rechnersystem verbunden. Dieses umfasst im vorliegenden Ausführungsbeispiel ein Bedien- und Beobachtungssystem, das aus einer Anzahl von Operator Station Servern OS (abgekürzt OS Server, OS1, OS2 ...) und zumindest einem Client Rechner besteht. Der OS Client OSC tauscht über ein weiteres Bussystem TB, welches hier als Terminalbus TB bezeichnet wird, Informationen und Daten mit den OS-Servern aus. Ferner kann das Automatisierungssystem noch weitere Server umfassen. Das in Fig. 1 dargestellte Automatisierungssystem ist derart ausgebildet, dass es eine weitere Komponente, eine Engineering Workstation ES, besitzt. Bei dieser handelt es sich um einen Rechner oder Server, der zur Datenübertragung an die Kommunikationssysteme AB und TB angeschlossen ist und auf den ebenso über einen Client des Bedien- und Beobachtungssystems zugegriffen werden kann. Bei Bedarf können noch weitere Rechner oder Server S mit den Kommunikationssystemen AB und TB verbunden werden.

In Fig. 1 sind neben Teilen der soeben beschriebenen Hardware-Konfiguration des Automatisierungssystems auch Teile der Software-Architektur zur Implementierung des erfindungsgemäßen Verfahrens in vereinfachter Form dargestellt.

Gemäß der Erfindung sind in dem Engineering-Server ES als Software-Bausteine oder Softwarekomponenten ausgebildete virtuelle Komponenten der realen oben beschriebenen Hardwarekonfiguration dargestellt.

Figur 1 zeigt beispielhaft ein Funktionsdiagramm eines koexistenten digitalen Zwillings für eine betriebsparallele Optimierung. Für die realen Geräte (Operator Station Server OS1, OS2, Automatisierungsgeräte AS1, AS2...) existieren jeweils virtuelle Gegenstücke, die virtuellen Komponenten: VOS1, VOS2, VAS1, VAS2. Die logischen Verbindungen zwischen den realen Komponenten sind durch die fetten schwarzen Linien symbolisiert. Die logischen Verbindungen zwischen den virtuellen Komponenten sind durch gestrichelte Linien symbolisiert. Aufgrund der logischen Verbindungen kann ein Client flexibel zwischen realer Anlage und digitalem Zwilling umschalten. Sowohl die reale Anlage als auch der digitale Zwilling ist durch das integrierte Engineering konfiguriert und überwacht. Die Feldebene wird durch den Anlagensimulator SIMIT virtualisiert.

Durch die Anwendung der erfinderischen Maßnahmen ist es nun möglich, im Engineering virtuelle Automatisierungen und Operator Station Server koexistent zu planen, so dass zur Laufzeit in einem Operator Station Client zwischen realen und virtuellen Anlagenteilen umgeschaltet werden kann. Möchte beispielsweise ein Operator eine Einstellung eines Reglers optimieren, so kann er diese betriebsparallel an einem virtuellen Anlagenteil testen, bevor er diese in den realen Anlagenteil einspielt.

Figur 2 zeigt beispielhaft ein Funktionsdiagramm eines koexistenten digitalen Zwillings für eine stufenweise Inbetriebnahme. In diesem Ausführungsbeispiel existieren für einige reale Komponenten (Operator Station Server OS1 und das Automatisierungsgerät AS1) auf dem Server S jeweils virtuelle Gegenstücke (VOS1 und VAS1) mit dem Anlagensimulator SIMIT zur Virtualisierung der Feldebene. Die virtuellen Komponenten VAS1, VOS1 und SIMIT sind über die gestrichelt dargestellte logische Verbindung untereinander und mit dem Client-Rechner verknüpft. Der Client kann flexibel zwischen digitalem (Teil-)Zwilling und dem Engineering der realen Komponenten im Engineering-Server ES umschalten. Der Zugriff des Client-Rechners auf den Engineering-Server ist mit einer fetten schwarzen Linie symbolisiert. Beim Engineering kann der Projekteur am Client beispielsweise das in der VAS1 ausgeführte Automatisierungsprogramm beobachten (debuggen), korrigieren und auch neu laden. Parallel hierzu können die Anlagenbilder in VOS1 visualisiert und getestet werden. Sofern Fehlerkorrekturen notwendig sind, können diese auch gleich beim Engineering vorgenommen und neu geladen werden. Ist die Inbetriebnahme abgeschlossen, können - wie zuvor beschrieben - die Automatisierungsprogramme und Anlagenbilder aus den virtuellen Komponenten den realen Geräten zugewiesen und geladen werden. Sowohl die reale Anlage als auch der digitale (Teil-)Zwilling ist durch das erfindungsgemäße integrierte Engineering konfiguriert und überwacht.

## Patentansprüche

1. Verfahren zum Engineering eines Automatisierungssystems (A) zur Steuerung eines Prozesses in einer technischen Anlage,
wobei das Automatisierungssystem (A) eine Vielzahl von Hardware-Komponenten (OS1, OS2, AS1, AS2, ...) zur Ausführung von Anzeige-, Bedien- und Automatisierungsfunktionen umfasst, und diese Komponenten über Kommunikationssysteme miteinander verbunden sind,
wobei unabhängig vom Betrieb der Anlage, parallel zum Engineering mindestens einer realen Hardware-Komponente diese Komponente virtualisiert, als koexistenter digitaler Zwilling erzeugt, instanziiert und mit anderen virtuellen oder realen Komponenten logisch verknüpft wird,
**dadurch gekennzeichnet,**
- **dass** die Automatisierungsprogramme und Anlagenbilder der erzeugten virtuellen Komponenten (VOS1, VOS2, VAS1, VAS2, ... ) konfiguriert und optimiert werden, indem während des Engineerings zur Laufzeit innerhalb eines Zyklus des Automatisierungssystems in einem Operator Station Client zwischen realen Komponenten und virtuellen Komponenten umgeschaltet wird, und
- **dass** anschließend die Automatisierungsprogramme und Anlagenbilder aus den virtuellen Komponenten (VOS1, VOS2, VAS1, VAS2, ...) den realen Komponenten zugewiesen und geladen werden, sodass die realen Komponenten mit der geänderten Konfiguration betrieben werden.

2. Verfahren nach Anspruch 1,
**dadurch gekennzeichnet, dass** die virtuellen Komponenten (VOS1, VOS2, VAS1, VAS2, ...) beliebig auf Servern (ES, S) des Automatisierungssystems (A) verteilt werden, und die Verteilung der virtuellen Komponenten auf die Server des Automatisierungssystems (A) konfigurierbar ist.

3. Verfahren nach Anspruch 1 oder 2,
**dadurch gekennzeichnet, dass** die Anzahl der virtuellen Komponenten (VOS1, VOS2, VAS1, VAS2, ...) frei wählbar ist.

4. Verfahren nach einem der vorhergehenden Ansprüche
**dadurch gekennzeichnet, dass** die logischen Verbindungen zur Kommunikation sowohl zwischen den virtuellen Komponenten (VOS1, VOS2, VAS1, VAS2, ...), als auch zwischen den virtuellen und den realen Komponenten konfigurierbar sind.

5. Verfahren nach einem der vorhergehenden Ansprüche,
**dadurch gekennzeichnet, dass** die virtuellen Komponenten (VOS1, VOS2, VAS1, VAS2, ...) in einer Datenbank verwaltet werden.

6. Verfahren nach einem der vorhergehenden Ansprüche,
**dadurch gekennzeichnet, dass** die virtuellen Komponenten (VOS1, VOS2, VAS1, VAS2, ...) einer technologischen Hierarchie zugewiesen werden, wodurch definiert wird, welche Anlagenteile durch welche Geräte automatisiert werden.

7. Verfahren nach einem der vorhergehenden Ansprüche,
**dadurch gekennzeichnet, dass** den virtuellen Komponenten (VOS1, VOS2, VAS1, VAS2, ...) Funktionspläne oder Anlagenbilder für eine Inbetriebnahme zugewiesen werden, bevor diese parallel zu den realen Komponenten (OS1, OS2, AS1, AS2, ...) auf die Server des Automatisierungssystems (A) geladen werden.

8. Automatisierungssystem (A) zur Steuerung eines Prozesses in einer technischen Anlage,
wobei das Automatisierungssystem (A) eine Vielzahl von Hardware-Komponenten (OS1, OS2, AS1, AS2, ...) zur Ausführung von Anzeige- und Bedienfunktionen und Automatisierungsfunktionen umfasst, und diese Komponenten (OS1, OS2, AS1, AS2, ...) über Kommunikationssysteme (TB, AB) miteinander verbunden sind,
**dadurch gekennzeichnet, dass** das Automatisierungssystem (A) neben einem Engineering-Server (ES) zur Konfiguration der Hardware-Komponenten (OS1, OS2, AS1, AS2, ...) mindestens einen weiteren Server (S) umfasst, und die Server zur Ausführung des Verfahrens nach einem der Ansprüche 1 bis 7 ausgebildet sind.

## Claims

1. Method for engineering an automation system (A) for controlling a process in a technical plant,
wherein the automation system (A) comprises a plurality of hardware components (OS1, OS2, AS1, AS2, ...) for performing display, operating and automation functions, and these components are connected to one another by way of communication systems,
wherein
independently of the operation of the plant, in parallel with the engineering of at least one real hardware component, this component is virtualized, generated as a coexistent digital twin, instantiated and logically linked with other virtual or real components,
**characterised in that**
the automation programs and plant images of the virtual components (VOS1, VOS2, VAS1, VAS2, ...) generated are configured and optimized, by a switchover taking place during runtime within a cycle of the automation system in an operator station client between real components and virtual components during engineering and
- the automation programs and plant images from the virtual components (VOS1, VOS2, VAS1, VAS2, ...) are then assigned to the real components and loaded so that the real components are operated with the amended configuration.

2. Method according to claim 1,
**characterised in that** the virtual components (VOS1, VOS2, VAS1, VAS2, ...) are distributed arbitrarily onto the servers (ES, S) of the automation system (A) and the distribution of the virtual components onto the servers of the automation system (A) can be configured.

3. Method according to claim 1 or 2,
**characterised in that**
the number of virtual components (VOS1, VOS2, VAS1, VAS2, ...) is freely selectable.

4. Method according to one of the preceding claims,
**characterised in that**
the logical connections for communication both between the virtual components (VOS1, VOS2, VAS1, VAS2, ...) and also between the virtual and the real components can be configured.

5. Method according to one of the preceding claims,
**characterised in that**
the virtual components (VOS1, VOS2, VAS1, VAS2, ...) are managed in a database.

6. Method according to one of the preceding claims,
**characterised in that**
the virtual components (VOS1, VOS2, VAS1, VAS2, ...) are allocated to a technological hierarchy, as a result of which it is defined which plant components are automated by which devices.

7. Method according to one of the preceding claims,
**characterised in that**
functional plans or plant images for a commissioning are allocated to the virtual components (VOS1, VOS2, VAS1, VAS2, ...) before these are loaded onto the servers of the automation system (A) in parallel with the real components (OS1, OS2, AS1, AS2, ...).

8. Automation system (A) for controlling a process in a technical plant,
wherein the automation system (A) comprises a plurality of hardware components (OS1, OS2, AS1, AS2, ...) for performing display and operating functions and automation functions and these components (OS1, OS2, AS1, AS2, ...) are connected to one another by way of communication systems (TB, AB),
**characterised in that** in addition to an engineering server (ES) for configuring the hardware components (OS1, OS2, AS1, AS2, ...), the automation system (A) comprises at least one further server (S) and the servers are embodied to perform the method according to one of claims 1 to 7.

## Revendications

1. Procédé d'ingénierie d'un système (A) d'automatisation pour la commande d'un processus dans une installation technique,
dans lequel le système (A) d'automatisation comprend une pluralité de composants (OS1, OS2, AS1, AS2, ...) matériels pour l'exécution de fonctions d'affichage, de service et d'automatisation et ces composants communiquent entre eux par des systèmes de communication,
dans lequel
indépendamment du fonctionnement de l'installation, en parallèle à l'ingénierie d'au moins un composant matériel réel, ce composant est virtualisé, est produit comme double numérique coexistant, est instancié et est combiné logiquement à d'autres composants virtuels ou réels,
**caractérisé**
- **en ce que** l'on configure et optimise les programmes d'automatisation et les images d'installation des composants (VOS1, VOS2, VAS1, VAS2, ...) virtuels produits en commutant entre composants réels et composants virtuels pendant l'ingénierie pour le temps de fonctionnement dans un cycle du système d'automatisation dans un operator station client, et
- **en ce qu'**ensuite on affecte les programmes d'automatisation et images d'installation à partir des composants (VOS1, VOS2, VAS1, VAS2, ...) virtuels aux composants réels et on les charge, de manière à ce que les composants réels soient mis en fonctionnement avec la configuration modifiée.

2. Procédé suivant la revendication 1,
**caractérisé en ce que** l'on répartit les composants (VOS1, VOS2, VAS1, VAS2, ...) virtuels à volonté sur des serveurs (ES, S) du système (A) d'automatisation, et la répartition des composants virtuels sur les serveurs du système (A) d'automatisation est configurable.

3. Procédé suivant la revendication 1 ou 2,
**caractérisé en ce que** le nombre des composants (VOS1, VOS2, VAS1, VAS2, ...) virtuels peut être choisi librement.

4. Procédé suivant l'une des revendications précédentes, **caractérisé en ce que** les combinaisons logiques pour la communication peuvent être configurées tant entre les composants (VOS1, VOS2, VAS1, VAS2, ...) virtuels, qu'également entre les composants virtuels et les composants réels.

5. Procédé suivant l'une des revendications précédentes, **caractérisé en ce que** l'on gère les composants (VOS1, VOS2, VAS1, VAS2, ...) virtuels dans une base de données.

6. Procédé suivant l'une des revendications précédentes, **caractérisé en ce que** l'on affecte les composants (VOS1, VOS2, VAS1, VAS2, ...) virtuels à une hiérarchie technologique, grâce à laquelle on définit quelles parties d'installation sont automatisées par quels appareils.

7. Procédé suivant l'une des revendications précédentes, **caractérisé en ce que** l'on affecte, pour une mise en fonctionnement, aux composants (VOS1, VOS2, VAS1, VAS2, ...) virtuels, des plans de fonction ou des images d'installations avant de charger ceux-ci, en parallèle aux composants (OS1, OS2, AS1, AS2, ...) réels, sur les serveurs du système (A) d'automatisation.

8. Système (A) d'automatisation pour la commande d'un processus dans une installation technique,
dans lequel le système (A) d'automatisation comprend une pluralité de composants (OS1, OS2, AS1, AS2, ...) matériels pour l'exécution de fonctions d'affichage et de service et de fonctions d'automatisation, et ces composants (OS1, OS2, AS1, AS2, ...) communiquent entre eux par des systèmes (TB, AB) de communication,
**caractérisé en ce que** le système (A) d'automatisation comprend outre un serveur (ES) d'ingénierie pour la configuration des composants (OS1, OS2, AS1, AS2, ...) matériels, au moins un autre serveur (S) et les serveurs sont constitués pour l'exécution du procédé suivant l'une des revendications 1 à 7.
